# EUROPEAN PATENT APPLICATION

(11) **EP 0 633 561 A2**
(43) Date of publication of application: **11.01.1995**
(21) Application number: 94109799.0
(22) Date of filing: 24.06.1994
(51) Int. Cl.: G11B 5/53

(54) **Multichannel rotary magnetic head apparatus**

(30) Priority: 28.06.1993 JP 157364/93
(71) Applicant: HITACHI, LTD., Chiyoda-ku, Tokyo 100 (JP)
(72) Inventor: Ono, Seiji, Minami-ku, Yokohama-shi (JP); Masuda, Kenmei, Gurinpaku Totsuka Hiruzu, Totsuka-ku, Yokohama-shi (JP)
(74) Representative: Altenburg, Udo, Dipl.-Phys.

(57) **Abstract**

The present invention provides a small-sized multichannel rotary magnetic head apparatus suitable for use in digital video-tape-recorders for public welfare. This rotary magnetic head apparatus is comprised of a motor 1, a rotating drum 8 mounted on a rotating shaft 2 of the motor 1, a head base 9, a plurality of magnetic heads 10a to 10d mounted on the head base 9, and a fixed or stationary drum 4 located coaxially with the rotating drum 8 and the head base 9. The magnetic heads 10a to 10d are mounted on the lower surface of the head base 9, and adjustment of the difference in the levels of the magnetic heads is made by bringing level difference adjusting screws 16 screwed into the rotating drum 8 into contact with the upper surface of the head base 9. The level difference adjusting screws 16 may be provided on the head base 9 itself. Further, in addition to the level difference adjusting screws 16, screws for adjusting the distance between the adjacent magnetic heads may be provided.

## Description

### BACKGROUND OF THE INVENTION

This invention relates to a rotary magnetic head apparatus, and a method and apparatus for manufacturing the same and, more particularly, to arrangement of a rotary magnetic head apparatus for mounting more than four pieces of magnetic heads on a small diameter rotary drum with a high degree of precision, and a method and apparatus suitable for manufacturing such rotary magnetic head apparatus.

In recent years, development of digital video-tape-recorders for public welfare is under way. In order to put digital video-tape-recorders for public welfare to practical use, it is necessary to miniaturize such VTR apparatuses and increase the recording time, for which purposes, it becomes indispensable to reduce the diameter of the drum thereof, increase the number of magnetic heads which can be mounted on the drum, and narrow the recording track width.

While ordinary video-tape-recorders for public welfare are arranged such that a plurality of substrates (head bases), each having a magnetic head mounted thereon, are mounted on a rotary drum, as described, for example, in Japanese Patent Laid-Open Application No. SHO 59-79422, it is difficult to adopt such arrangement in video-tape-recorders for public welfare from special point of view, since reduction in the diameter of the drum and increase in the number of magnetic heads to be mounted on the drum are indispensable for them, as aforementioned. To cope with such a problem, arrangements as described in Japanese Patent Laid-Open Application Nos. HEI 2-257415 and HEI 4-186513 wherein one piece of head base having a required number of magnetic heads mounted thereon is assembled with a rotary drum as an integral unit thereof, and another arrangement as described in Japanese Patent Laid-Open Application No. HEI 4-205810 wherein one piece of head base having a required number of magnetic heads formed as an integral unit thereof is assembled integrally with a rotary drum have been proposed.

Furthermore, the above-mentioned Japanese Patent Laid-Open Application No. SHO 59-79422 describes techniques wherein each head base is formed with a slit to enable the magnetic head mounting portion to be subjected easily to elastic deformation, and after mounting the head bases provided with magnetic heads on the rotary drum, tapered screws screwed into the rotary drum are brought into contact with the respective magnetic head mounting portions to thereby adjust the positions of the magnetic heads in the direction of thrust and the distance between the adjacent magnetic heads. According to this techniques, it is possible to set the positions of the magnetic heads in the direction of thrust with a high accuracy, and narrow the recording track width. However, the magnetic head apparatuses described in Japanese Patent Laid-Open Application Nos. HEI 2-257415, HEI 4-186513 and HEI 4-205810 are not provided with any means for adjusting the positions of the magnetic heads mounted on the head base in the direction of thrust and the distance between the adjacent magnetic heads. Therefore, after mounting of the magnetic heads, their attitudes relative either to the head base or to the rotary drum cannot be adjusted. It is of course possible to enhance the accuracy of mounting the magnetic heads either onto the head base or onto the rotary drum by enhancing the accuracy of component parts, however, this brings forth such disadvantages as rise in costs of parts, lowering of the efficiency of assembling operation and decline in the yield of excellent products, thus increasing manufacturing costs of video-tape-recorders.

Meanwhile, Japanese Patent Laid-Open Application No. SHO 59-79422 describes techniques wherein the tapered face of the tapered screw is brought into contact with the side of each of the magnetic head mounting portions to subject the latter to elastic deformation, the amount of deformation of each of the magnetic head mounting portions varying with the amount of screwing-in of the tapered screw. According to this arrangement, when the tapered screw is turned, not only the distance between the adjacent magnetic heads, but also the positions of the mounting heads in the direction of thrust will change at the same time, thus bringing forth such disadvantage as either the distance between the adjacent magnetic heads or the position of each of the magnetic heads in the direction of thrust cannot be adjusted independently.

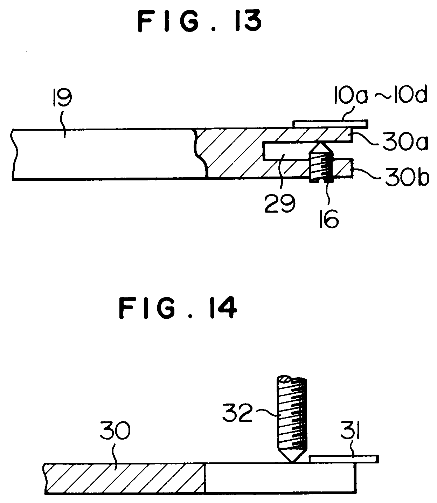

In a prior art as shown in Fig. 14, a screw 32 presses a surface of a head base 30 to adjust a position of a magnetic head 31 thereon.

### OBJECT AND SUMMARY OF THE INVENTION

An object of the present invention is to provide a rotational-type magnetic head device in which a recording and/or reading accuracy is improved, and to provide a producing method therefor.

According to the present invention, a rotational-type magnetic head device comprises,
a rotative drum,
a plurality of magnetic heads,
a head base on which the magnetic heads are mounted,
a rotating shaft to which the rotative drum and the head base are fixed to be rotated,
a stationary drum arranged substantially concentrically with the rotative drum, and
magnetic head adjusting means for adjusting a positional relationship between the magnetic heads in a direction substantially parallel to an axial direction of the rotating shaft.

Since the positional relationship between the magnetic heads in the direction substantially parallel to the axial direction of the rotating shaft so that the magnetic heads are arranged on an imaginary plane substantially perpendicular to the axial direction, the recording and/or reading accuracy by the magnetic heads is improved.

A method for producing a rotational-type magnetic head device in which a head base with at least one magnetic head thereon is rotated, comprises the steps of,
mounting the magnetic head onto the head base,
measuring a positional relationship between the head base and the magnetic head,
moving the magnetic head with respect to the head base substantially by a difference between the measured positional relationship and a predetermined or desired positional relationship between the magnetic head and the head base, and
fixing the magnetic head to the head base after the positional relationship becomes substantially identical to the predetermined or desired positional relationship.

Since the magnetic head is moved with respect to the head base substantially by the difference between the measured positional relationship and the predetermined or desired positional relationship after the magnetic head is mounted onto the head base, the positional relationship is corrected so that the recording and/or reading accuracy by the magnetic head is improved.

### BRIEF DESCRIPTION OF THE DRAWINGS

Fig. 1 is a exploded perspective view of one embodiment of a rotary drum device according to the present invention;
Fig. 2 is a sectional view illustrating a rotary magnetic head apparatus which is an object of the present invention;
Fig. 3 is a side elevational view of an integral head base showing an effect obtainable by the present invention;
Fig. 4 is a perspective view of a head base assembling apparatus according to the present invention;
Fig. 5 is a bottom plan view of another embodiment of the integral head base;
Fig. 6 is a sectional view of a magnetic head adjusting mechanism according to the present invention;
Fig. 7 is a bottom plan view of the magnetic head adjusting mechanism shown in Fig. 6;
Fig. 8 is a sectional view of another embodiment of the magnetic head adjusting mechanism;
Fig. 9 is a sectional view of a further embodiment of the magnetic head adjusting mechanism;
Fig. 10 is a sectional view of a still further embodiment of the magnetic head adjusting mechanism;
Fig. 11 is a sectional view of an even further embodiment of the magnetic head adjusting mechanism;
Fig. 12 is a sectional view of another embodiment of the magnetic head adjusting mechanism;
Fig. 13 is a sectional view of principal parts of a further embodiment of the magnetic head adjusting mechanism;
Fig. 14 is a sectional view of principal parts of a head base showing a disadvantage of the prior art head base.

### DETAILED DESCRIPTION OF THE EMBODIMENT

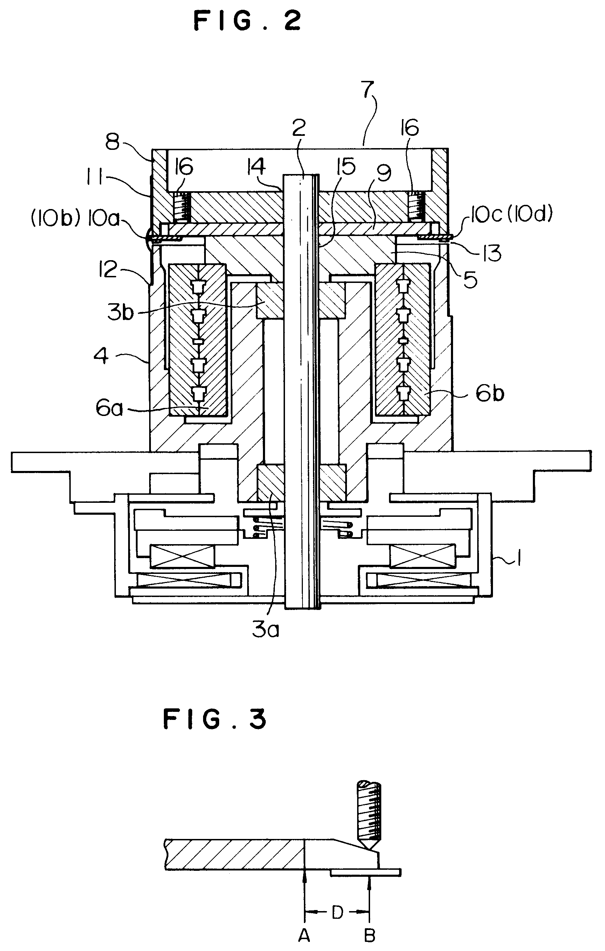

Fig. 2 shows a sectional view of a rotary magnetic head apparatus according to the present invention.

As shown in this figure, the rotary magnetic head apparatus of this embodiment is mainly composed of a motor 1, a rotating shaft 2 of the motor 1, a fixed or stationary drum 4 mounted on the shaft 2 through the intermediary of bearings 3a, 3b coaxially with the shaft 2, a supporting bed 5 fixedly secured to the rotating shaft 2, rotary transformers 6a and 6b provided between the fixed drum 4 and the supporting bed 5, and a rotary drum device 7 mounted on the supporting bed 5. The rotary drum device 7 is comprised of a rotating drum 8 fixedly secured to the aforementioned rotating shaft 2, a head base 9 attached to the rotating drum 8, and magnetic heads 10a, 10b, 10c, and 10d mounted on the head base 9. Reference numeral 11 denotes a magnetic tape, 12 a lead formed on the outer peripheral surface of the aforementioned fixed drum 4 for guiding the magnetic tape 11, 13 a clearance defined between the fixed drum 4 and the rotary drum 8, 14 a through-hole formed in the central part of the rotating drum 8, 15 a reference through-hole formed in the central part of the head base 9, and 16 screws for adjusting the difference in the levels of the aforementioned magnetic heads 10a to 10d.

The magnetic tape 11 is wound round the lead 12 formed on the outer peripheral surface of the aforementioned fixed drum 4, and is adapted to run thereon such that a part of the tape wound round strides over both the fixed drum 4 and the rotating drum 8. The leading ends of the magnetic heads 10a to 10d project slightly from the clearance 13 defined between the opposed ends of the fixed drum 4 and the rotating drum 8 to ensure that a satisfactory contact is made between the magnetic tape 11 and the magnetic heads 10a to 10d. Upon reading-out a signal, the signal read-out by means of the magnetic heads 10a to 10d is transmitted through the rotary transformer 6a fixedly secured to the supporting bed 5 and the rotary transformer 6b fixedly secured to the fixed drum 4 to a signal processing circuit (not shown) provided outside the rotary magnetic head apparatus, where the regenerated signal is subjected to a predetermined processing. Further, upon writing a signal, the signal transmission is made in reverse flow. Furthermore, in case of the digital video-tape-recorders, etc., for public welfare, it is necessary to set the diameter of the drum at about 20 mm, because of the needs for miniaturization.

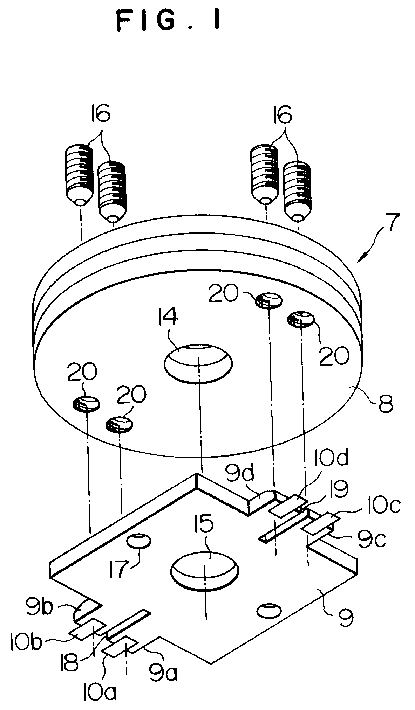

Fig. 1 shows an exploded perspective view of a first embodiment of the rotary drum device 7. As is obvious from this figure, the head base 9 of this embodiment is a substantially rectangular member having a reference hole 15 formed in the central part thereof and whose diameter is set such that the aforementioned rotating shaft 2 can be forced thereinto, and also having holes 17 formed on both sides of the reference hole 15 for purposes of insertion of screws (not shown) for fixedly securing the head base 9 to the aforementioned supporting bed 5. Further, the head base 9 has magnetic head mounting portions 9a, 9b, 9c and 9d formed so as to project from the opposite two sides thereof and on both sides of slits 18 and 19, respectively, two pieces on each side, i.e. four pieces in total. The magnetic heads 10a to 10d are mounted on the head base 9 in such a manner that the magnetic gaps are formed on the outermost periphery thereof to ensure satisfactory contact of the magnetic tape 11 therewith, and also each of the magnetic heads 10a to 10d projects from the rotating drum 8 by a predetermined value.

The rotating drum 8 has a hole 14 formed in the central part thereof and whose diameter is equal to that of the aforementioned reference hole 15, and has also screw-threaded holes 20 formed at positions corresponding to those of the magnetic head mounting portions 9a to 9d when the head base 9 is assembled concentrically therewith, the holes 20 serving to insert therein screws 16 for adjusting the difference in the levels of the magnetic heads 10a to 10d.

The other component parts, i.e., the motor 1, the rotating shaft 2, the bearings 3a and 3b, the supporting bed 5 and the rotary transformers 6a, 6b belong to publicly known techniques and do not constitute the essential points of the present invention, and therefore, the description of them is omitted herein.

The rotary drum device 7 of this embodiment is assembled by locating the magnetic head mounting portions 9a to 9d formed on the head base 9 opposite to the screw-threaded holes 20 formed in the rotating drum 8, and then forcing the rotating shaft 2 of the motor 1into the central hole 14 in the rotating drum 8 and the reference hole 15 formed in the head base 9, as shown in Fig. 2. Subsequently, the screws 16 for adjusting the difference in the levels of the magnetic heads are threadably engaged with the screw-threaded holes 20 so that the leading ends of the screws 16 may contact the magnetic head mounting portions 9a to 9d of the head base 9 so as to allow the magnetic head mounting portions 9a to 9d to be subjected to elastic deformation to thereby adjust the difference in levels such that the gap portions between the adjacent magnetic heads 10a, 10b and 10c, 10d may be located flush.

Since the rotary magnetic head apparatus of this embodiment is constructed such that the magnetic heads 10a to 10d are attached onto the lower surface of the head base 9 and the difference in the levels of the magnetic heads 10a to 10d is adjusted by urging or depressing the upper surface of the head base 9 by means of the level difference adjusting screws 16, the screws 16 can be set at any positions on the magnetic head mounting portions 9a to 9d, respectively, without causing interference of the magnetic heads with the screws 16 which occur in case the magnetic heads are mounted on the upper surface of the head base. Consequently, even in case the magnetic head mounting portions 9a to 9d are miniaturized, a sufficiently large distance can be secured between a fulcrum A on each of the magnetic head mounting portions 9a to 9d and the portion with which each of the screws 16 is brought into contact, as shown in Fig. 3 so that the position of each of the magnetic heads 10a to 10d in the direction of thrust can be adjusted by a small magnitude of force, and also precise adjustments of the positions of the magnetic heads in the direction of thrust can be made easily. Further, since each of the pairs of magnetic head mounting portions 9a, 9b and 9c, 9d is separated by the slits 18 and 19, respectively, each of the magnetic head mounting portions 9a to 9d can be subjected easily to elastic deformation, and also the difference in the level of each of the magnetic heads can be adjusted independently, thereby rendering it possible to conduct adjustments of the difference in the levels very easily.

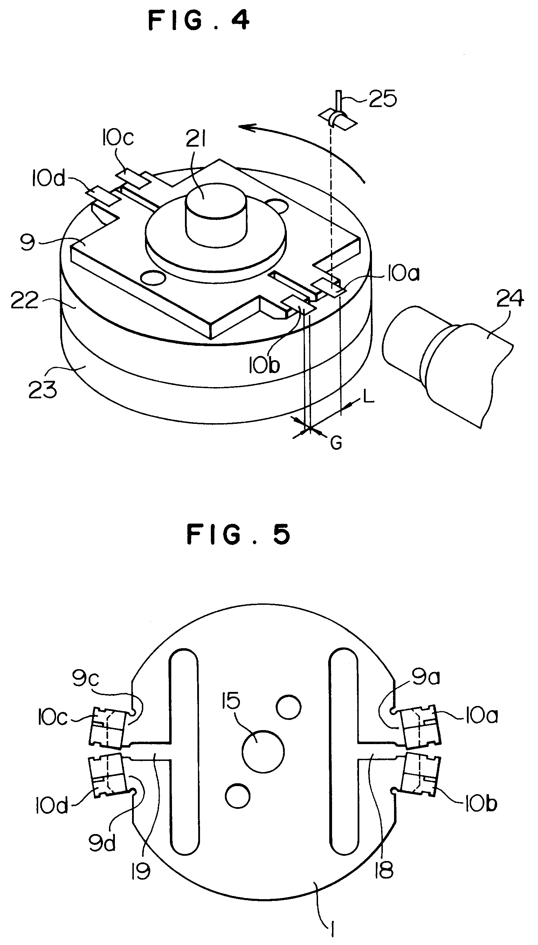

In the next place, the construction of an apparatus for mounting the magnetic heads 10a to 10d on the head base 9 and a method of mounting the magnetic heads on the head base 9 using the apparatus will be described with reference to Fig. 4.

As shown in Fig. 4, a head base assembling apparatus according to the present invention comprises a rotary table 22 having a projection 21 formed on the upper surface thereof and adapted to be fitted somewhat tightly into the reference hole 15 formed in the head base 9; a revolving phase detection means 23 such as, for example, a rotary encoder adapted to detect the revolving phase of the rotary table 22; a magnetic head position detector means 24 such as, for example, an interference microscope adapted to optically detect a deviation or peripheral position of the bead gap (which is a magnetic gap between magnetically permeable surfaces of the magnetic head for magnetizing the recording surface and/or detecting the magnetism of the recording surface) from an optical axis which is oriented substantially radially of the rotary table 22 as well as a deviation of the distance or radial position of the head gap between the center of rotation of the rotary table 22 and the head gap from a predetermined value, and a deviation of attitude of the magnetically permeable surfaces from a desired attitude thereof; and a magnetic head mounting means 25 such as, for example, manipulator means adapted to mount the magnetic heads 10a to 10d on the head base 9 so that each deviation signal detected by the magnetic head position detector means 24 is reduced to a minimum.

Prior to mounting the magnetic heads 10a to 10d on the head base 9, complete processing of the head base 9and the magnetic heads 10a to 10d is made so as to eliminate the need for processing of them after the completion of the assembly thereof. Thereafter, the projection 21 of the rotary table 22 is fitted into the reference hole 15 formed in the head base 9 so that the lower surface of the head base 9 facing the rotating drum 8 may rest on the rotary table 22. While output signal from the revolving phase detector means 23 is being monitored, the rotary table 22 is turned so that a gap setting portion of one of the magnetic head mounting portions is aligned with the optical axis of the magnetic head position detector means 24. Subsequently, the magnetic head mounting means 25 is driven to temporarily mount the magnetic head 10a on the magnetic head mounting portion 9a, and then the deviation of the head gap from the optical axis, the deviation of the distance between the center of rotation of the rotary table 22 and the head gap from the predetermined value and the deviation of attitude are optically detected by the magnetic head position detector means 24, to thereby compensate the position and attitude of the temporarily mounted magnetic head 10a by means of the magnetic head mounting means 25 so that the deviation signal detected by the magnetic head position detector means 24 are reduced to the minimum. When the deviation signals have been reduced to the minimum, the magnetic head 10a is fixedly secured to the head base 9 by means of adhesive bonding or setscrews, etc. Thereafter, the above-mentioned step is repeated for the other magnetic head mounting portions to mount a required number of magnetic heads on the head base 9. After that, windings are connected to the magnetic heads 10a to 10d, and then the windings are connected with the coil of the rotary transformer 6a.

According to the above-mentioned method and apparatus, prior to mounting the head base 9 onto the rotary drum 8, the magnetic heads 10a to 10d can be mounted on the head base 9 at such an accuracy that each of a gap L (which is the peripheral distance between the adjacent magnetic heads in the direction perpendicular to the axis of the rotating shaft 2) and an amount of radial projection G of each of the magnetic heads from a datum circular surface of the rotary table 22 is within several micrometers from a predetermined value.

Fig. 5 shows a structure of another embodiment of the integral head base 9. The head base 9 according to this embodiment is a substantially circular member having two pairs of outwardly projecting magnetic head mounting portions 9a, 9b and 9C, 9d formed on the diametrally opposite sides of the reference hole 15, i.e., four pieces in total. The two pairs of the magnetic head mounting portions 9a, 9b and 9c, 9d are divided by substantially "T" shaped slits 18 and 19, respectively, so that they may be elastically deformed easily. The component parts of this embodiment identical to those of Fig. 1 are denoted by the same numerals, and the description thereof is omitted. Since the head base 9 of this embodiment is constructed such that the two pairs of magnetic head mounting portions 9a, 9b and 9c, 9d are divided by the substantially "T" shaped slits 18 and 19, respectively, the magnetic head mounting portions 9a to 9d become more flexible and uniform in flexibility so that the difference in the levels of the magnetic heads 10a to 10d and the distance between the adjacent magnetic heads in the direction perpendicular to the axis of the rotating shaft 2 can be adjusted easily.

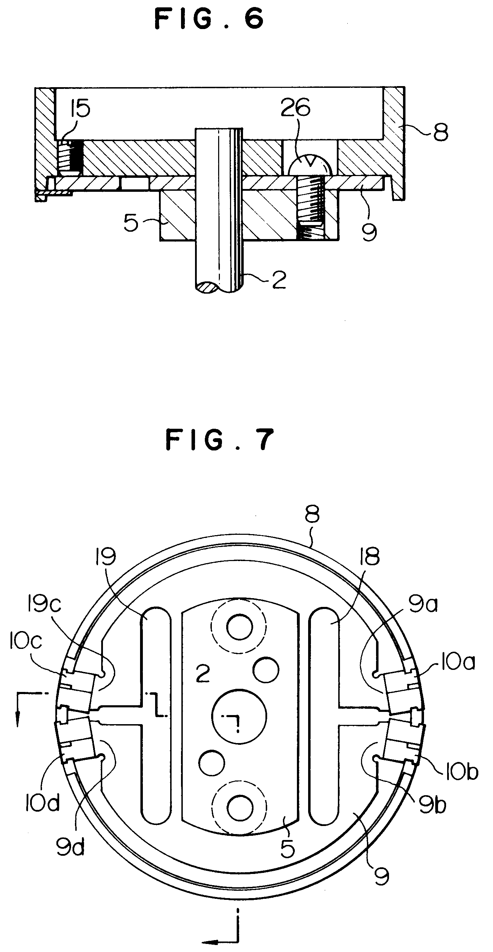

With reference to Figs. 6 and 7, a method of mounting the integral base head 9 shown in Fig. 5 on the rotating drum 8 will be described. First of all, the rotating shaft 2 is fitted into the supporting bed 5. After that, the integral head base 9 with the magnetic heads 10a to 10d mounted thereon facing downwards is fitted over the rotating shaft 2, and then the integral head base 9 is fixedly secured to the supporting bed 5. Subsequently, the rotating drum 8 is attached to the leading end of the rotating shaft 2.

Thereafter, the integral base head 9 is subjected to elastic deformation by means of the level difference adjusting screws 16 screwed into the rotating drum 8 to thereby conduct adjustments of the difference in the levels of the magnetic heads 10a to 10d mounted on the magnetic head mounting portions 9a to 9d, respectively. The degree of right angle between the outer peripheral surface of the rotating drum 8 and the surface of the drum 8 on which the head base 9 is mounted is subjected to severe control. Further, the deviation of the parallel degree of the surface of the head base 9 on which the magnetic heads are mounted relative to the opposite surface thereof and that of the degree of planarity of the said two opposed surfaces are controlled so that they are kept within several micrometers. Thus, when the rotating drum 8, the supporting bed 5 and the integral head base 9 are assembled integrally, as mentioned above, then the swing of the outer peripheral surface of the rotating drum 8 can be restrained.

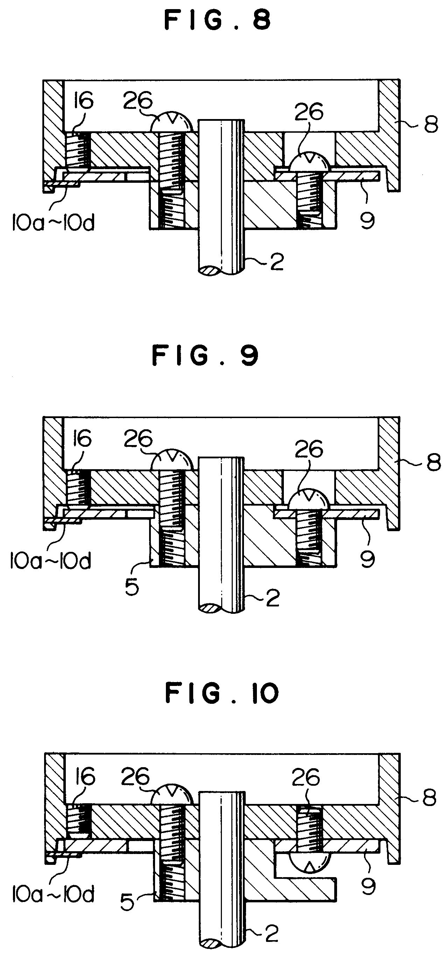

Further embodiments of the magnetic head adjusting mechanism according to the present invention are shown in Figs. 8 to 12.

The magnetic head adjusting mechanism shown in Fig. 8 is arranged such that the lower surfaces of the rotating drum 8 and the head base 9 are rested directly on the upper surface of the supporting bed 5, and also alignment of the head base 9 is made by means of the outer peripheral surface of a cylindrical projection 4a formed on the lower surface of the rotating drum 8. The other component parts of this embodiment are the same as those of Figs. 6 and 7, and denoted by the same reference numerals, and therefore, the description thereof is omitted herein.

The magnetic head adjusting mechanism as shown in Fig. 9 is constructed such that the supporting bed 5 is formed with a first reference surface 5a adapted to mount the head base 9 and a second reference surface 5badapted to mount the rotating drum 8, and also alignment of the head base 9 is made by means of a step portion 5c standing from the inner peripheral edge of the first reference surface 5a. The other component parts of this embodiment are identical to those of Figs. 6 and 7, and denoted by the same reference numerals, and so the description thereof is omitted.

The above-mentioned magnetic head adjusting mechanisms as shown in Figs. 8 and 9 bear the same fruit as that of the aforementioned magnetic head adjusting mechanism according to the first embodiment, and has an additional advantage that there is no need for severe control of the parallel degree of upper and lower surfaces of the head base 9 because of the head base 9 and the rotating drum 8 being mounted independently on the supporting bed 5.

The magnetic head adjusting mechanism as shown in Fig. 10 is constructed such that the lower surface of the rotating drum 8 is directly mounted on the upper surface of the supporting bed 5, and the upper surface of the head base 9 is fitted directly onto the lower surface of the rotating drum 8, and also alignment of the head base 9 is made by means of the outer peripheral surface of a cylindrical projection 5d formed on the upper surface of the supporting bed 5. The other component parts of this embodiment are identical to those of Figs. 6 and 7, and denoted by the same reference numerals, and so the description of them is omitted herein.

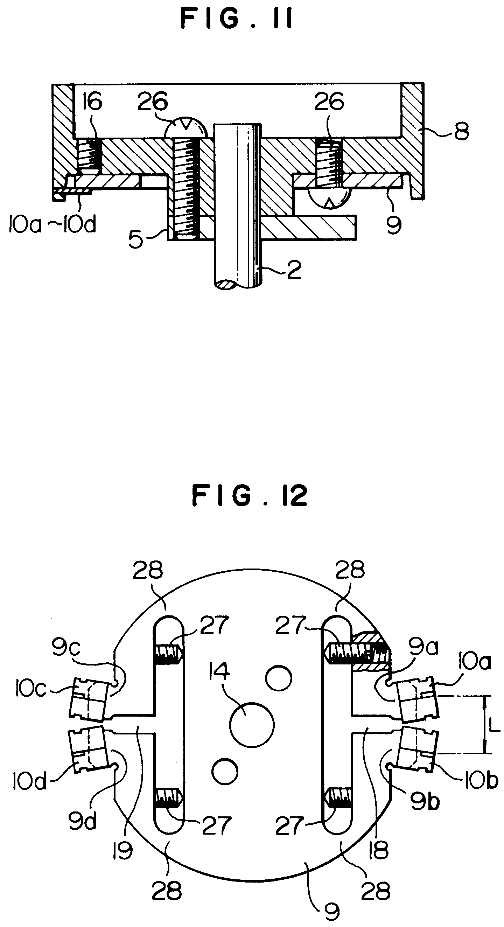

The magnetic head adjusting mechanism as shown in Fig. 11 is arranged such that the lower surface of the rotating drum 8 is mounted directly on the upper surface of the supporting bed 5, and the upper surface of the head base 9 is fitted directly onto the lower surface of the rotating drum 8, and also alignment of the head base 9 is made by means of the outer peripheral surface of a cylindrical projection 4a formed on the lower surface of the rotating drum 8. The other component parts of this embodiment are the same as those of Figs. 6 and 7, and denoted by the same reference numerals, and therefore, the description of them is omitted herein.

The magnetic head adjusting mechanisms as shown in Figs. 10 and 11 not only bear the same fruit as that of the magnetic head adjusting mechanism according to the first embodiment, but also bring forth an additional advantage that after the head base 9 is fitted to the rotating drum 8 the latter is attached to the supporting bed 5, and therefore replacement of the head base 9 can be made only by replacement of the rotating drum 8, thereby facilitating the replacement.

Fig. 12 shows a method of adjusting the gap or distance L between the adjacent magnetic heads on the head base 9 having the aforementioned substantially "T" shaped slits 18 and 19 and the amount of projection G of each of the magnetic heads 10a to 10d. As shown in this figure, gap or distance adjusting screws 27 are screwed into the head base 9 from the portions thereof adjacent to the magnetic head mounting portions 9a to 9d formed on the outer peripheral surface so that the leading ends of the screws 27 are brought into contact with the slits 18 and 19, to thereby swing the head mounting portions 9a to 9d about portions 27 which are subjected to elastic deformation. The gap or distance L between the adjacent magnetic heads 9a and 9b and 9c and 9d can be adjusted properly by adjusting the amount of the screws to be screwed into the head base 9. The adjustment of the difference in the levels of the magnetic heads 10a to 10d may of course be made in parallel with the adjustments of the gap or distance L between the adjoining magnetic heads and the amount of projection G of the magnetic heads by combining the former adjustment with the adjustment using the level difference adjusting screws 16 which was described in the aforementioned embodiments. According to the method of this embodiment, the adjustment of the difference in the levels of the magnetic heads 10a to 10d and adjustments of the distance L between the adjacent magnetic heads and the amount of projection G of the magnetic heads may be made independently, thereby rendering it possible to conduct the aforementioned adjustments extremely easily.

Fig. 13 shows a still further embodiment of the magnetic head adjusting mechanism according to the present invention. The head base of this embodiment is characterized in that the base per se is provided with means for adjusting the difference in the levels of each of the magnetic heads in the direction of thrust. Stating in brief, as shown in Fig. 13, the head base 9 has a slit 29 formed in substantially central part thereof in the direction of the thickness thereof, the slit 29 forming two portions which can be subjected easily to elastic deformation, one portion 30a of which is adapted to mount the magnetic heads 10a to 10d thereon, whilst the other portion 30b is fitted with adjusting screws 16. The arrangement is made such that the aforementioned one portion which can be deformed easily is urged or pushed by the leading ends of the adjusting screws 16 fitted to the other portion 30b, thus allowing the head base to be locally subjected to elastic deformation to adjust the positions of the magnetic heads 10a to 10d in the direction of thrust.

Further, while the rotary drum devices on which four pieces of magnetic heads are mounted are described in the above-mentioned embodiments, a system capable of mounting more than four pieces of magnetic heads can be realized in the same manner.

Still further, in case a large number of magnetic heads are mounted on a single head base, wirings which connect the windings coiled round the magnetic heads with the rotary transformer 6a adapted to be rotated become complex, and therefore, to solve such difficulty, wiring patterns may be printed on the head base 9, thereby making it possible to conduct the terminal treatments easily.

Furthermore, while, in the above-mentioned embodiments, adjustments of the difference in the levels of the magnetic heads and the distance between the adjacent magnetic heads in the direction perpendicular to the axis of the rotating shaft are made by subjecting the head base 9 to elastic deformation, the same effect can be achieved by subjecting the head base 9 to plastic deformation.

As mentioned hereinabove, according to the present invention, since the magnetic heads are mounted on the lower surface of the head base, and the level difference adjusting means are provided between the rotating drum and the upper surface of the head base, or alternatively, the level difference adjusting means are provided on the head base itself, such problem as the contact of the level difference adjusting means with the magnetic heads, which occur in case magnetic heads are mounted on the upper surface of the head base and the level difference adjusting means are provided between the rotating drum and the upper surface of the head base can be eliminated. Consequently, the level difference adjusting means can be set at any position on each of the magnetic head mounting portions. Therefore, even in case the magnetic head mounting portions are miniaturized, a large distance can be secured between the fulcrum of each of the magnetic head base mounting portions and each of the level difference adjusting means setting portions, so that the positions of the magnetic heads in the direction of thrust can be adjusted by a small magnitude of force, and also precise adjustment of the positions of magnetic heads in the direction of thrust can be made easily.

## Claims

1. A rotational-type magnetic head device comprising,
a rotative drum,
a plurality of magnetic heads,
a head base on which the magnetic heads are mounted,
a rotating shaft to which the rotative drum and the head base are fixed to be rotated,
a stationary drum arranged substantially concentrically with the rotative drum, and
magnetic head adjusting means for adjusting a positional relationship between the magnetic heads in a direction substantially parallel to an axial direction of the rotating shaft.

2. A rotational-type magnetic head device according to claim 1, wherein the head base has a movable part on which at least one of the magnetic heads is arranged and a base part, and the magnetic head adjusting means changes a positional relationship between the movable part and the base part so that a position of the at least one of the magnetic heads on the movable part is adjusted in the direction.

3. A rotational-type magnetic head device according to claim 2, wherein the magnetic head adjusting means has a force generator for generating a force between the movable part and the base part in the head base to change the positional relationship therebetween.

4. A rotational-type magnetic head device according to claim 1, wherein the magnetic head adjusting means has a force generator for generating a force, and the force is applied to the head base from an outside of the head base to deform the head base at least partially, so that a position of the at least one of the magnetic heads on the head base is adjusted in the direction.

5. A rotational-type magnetic head device according to claim 1, further comprising another magnetic head adjusting means for adjusting another positional relationship between the magnetic heads in another direction substantially perpendicular to the axial direction of the rotating shaft.

6. A rotational-type magnetic head device according to claim 5, wherein the head base has a movable part on which at least one of the magnetic heads is arranged and a base part, and the another magnetic head adjusting means changes a positional relationship between the movable part and the base part so that a position of the at least one of the magnetic heads on the movable part is adjusted in the another direction.

7. A rotational-type magnetic head device according to claim 6, wherein the another magnetic head adjusting means has a force generator for generating a force between the movable part and the base part in the head base to change the positional relationship therebetween.

8. A rotational-type magnetic head device according to claim 5, wherein the another direction is a substantially radial direction of the stationary and rotative drums.

9. A rotational-type magnetic head device according to claim 5, wherein the another direction is a substantially circumferential direction of the stationary and rotative drums.

10. A rotational-type magnetic head device according to claim 5, wherein the another direction is a combination of radial and circumferential directions of the stationary and rotative drums.

11. A rotational-type magnetic head device according to claim 1, wherein the rotating shaft is fitted into the head base.

12. A rotational-type magnetic head device according to claim 1, wherein a part of the head base on which at least one of the magnetic heads is mounted is swingable about an axis substantially perpendicular to the direction to adjust the positional relationship.

13. A rotational-type magnetic head device according to claim 5, wherein a part of the head base on which at least one of the magnetic heads is mounted is swingable about an axis substantially parallel to the direction to adjust the another positional relationship.

14. A rotational-type magnetic head device according to claim 1, wherein a part of the head base on which at least one of the magnetic heads is mounted is elastically movable in the direction to adjust the positional relationship.

15. A rotational-type magnetic head device according to claim 5, wherein a part of the head base on which at least one of the magnetic heads is mounted is elastically movable in the another direction to adjust the another positional relationship.

16. A rotational-type magnetic head device according to claim 5, wherein the positional relationship is adjusted independently from the another positional relationship.

17. A rotational-type magnetic head device according to claim 4, wherein the head base has a surface on which the magnetic heads is mounted, and another surface through which the force by force generator is applied to the head base, and the surface is opposed to the another surface.

18. A method for producing a rotational-type magnetic head device in which a head base with at least one magnetic head thereon is rotated, comprising the steps of,
mounting the magnetic head onto the head base,
measuring a positional relationship between the head base and the magnetic head,
moving the magnetic head with respect to the head base substantially by a difference between the measured positional relationship and a predetermined positional relationship between the magnetic head and the head base, and
fixing the magnetic head to the head base after the positional relationship becomes substantially identical to the predetermined positional relationship.

19. A method according to claim 18, wherein the magnetic head is moved in substantially radial and circumferential directions of the magnetic head device.

20. An apparatus for producing a rotational-type magnetic head device in which a head base with at least one magnetic head thereon is rotated, comprising,
means for mounting the magnetic head onto the head base,
means for measuring a positional relationship between the head base and the magnetic head,
means for moving the magnetic head with respect to the head base substantially by a difference between the measured positional relationship and a predetermined positional relationship between the magnetic head and the head base, and
means for fixing the magnetic head to the head base after the positional relationship becomes substantially identical to the predetermined positional relationship.
